# FASCICULE DE BREVET EUROPEEN

(11) **EP 0 577 517 B1**
(45) Date de publication et mention de la délivrance du brevet: **25.09.1996**
(21) Numéro de dépôt: 93401712.0
(22) Date de dépôt: 01.07.1993
(51) Int. Cl.: B60N 2/16, B60N 2/22, B60N 2/42

(54) **Dispositif pour bloquer un siège de véhicule lors des chocs**
Vorrichtung zur Blockierung eines Fahrzeugsitzes während eines Aufpralls
Device to lock a vehicle seat in case of collision

(30) Priorité: 03.07.1992 FR 9208243
(43) Date de publication de la demande: 05.01.1994
(73) Titulaire: BERTRAND FAURE AUTOMOBILE "B.F.A.", F-91300 Massy (FR)
(72) Inventeur: Canteleux, Joel, F-28320 Armenonville (FR)
(74) Mandataire: Burbaud, Eric

(56) Documents cités:
- WO-A-92/05978
- DE-A- 2 708 461
- DE-A- 3 841 711
- FR-A- 2 195 948
- FR-A- 2 354 215
- FR-A- 2 397 507
- US-A- 4 707 010
- US-A- 4 733 912

## Description

L'invention concerne les sièges de véhicules comprenant au moins un composant réglable en position, composant que l'on désire bloquer en sa position de réglage lorsque le véhicule subit un choc brusque.

De tels composants sont en particulier l'assise du siège, réglable en hauteur par rapport à l'embase, le dossier du siège, réglable en inclinaison par rapport à l'assise, ou encore l'appui-tête, également réglable en inclinaison par rapport au dossier.

Les mécanismes de réglage en position des composants considérés sont en général prévus pour résister aux sollicitations normalement exercées sur ces composants par la personne assise sur le siège, et en particulier par son poids, son appui dorsal...

Ils ne sont pas toujours suffisants pour résister aux chocs brusques subis par les véhicules lors des accidents et en outre ils peuvent être déverrouillés lors des réglages.

Que ces mécanismes soient insuffisamment résistants ou déverrouillés, il peut en résulter, lors des chocs, des conséquences graves pour les passagers, telles que les suivantes :
- la "rehausse" prévue entre l'embase et l'assise peut subir un affaissement soudain provoquant un affaissement du bourrelet avant de l'assise, parfois appelé "bosse anti-sous-marinage" : comme la ceinture de sécurité associée au siège, généralement accrochée sur la caisse du véhicule, demeure à son niveau, l'espace réservé à l'usager entre l'assise et la ceinture est alors brusquement agrandi, ce qui rend la ceinture totalement inefficace, le corps de l'usager n'étant plus maintenu sur le siège et pouvant alors glisser vers l'avant ;
- le dossier articulé du siège peut subir un rabattement soudain vers l'avant, soit inhérent à sa propre masse, soit sollicité par l'usager dans le cas d'un siège à ceinture embarquée.

Pour remédier à ces inconvénients, il a déjà été proposé, dans le cadre du blocage angulaire d'un dossier de siège de véhicule, de suspendre une masse pendulaire à un axe lié à l'ossature de l'assise du siège, masse munie de crocs propres à coagir avec des encoches liées à l'ossature du dossier lorsqu'une décélération brusque d'intensité suffisante est appliquée sur le véhicule (document DE-A-2 708 461, correspondant au préambule de la revendication indépendante).

Le blocage angulaire ainsi obtenu est efficace, mais il n'est possible que pour un petit nombre de positions angulaires préréglées du dossier.

L'invention a pour but, surtout, de proposer des mécanismes propres à bloquer automatiquement les composants réglables en position des sièges de véhicules en leurs positions préréglées, quelles que soient ces positions, et ce dès qu'une décélération dépassant un certain seuil est appliquée sur les sièges concernés.

A cet effet, les dispositifs de blocage selon l'invention, destinés à être montés entre un composant réglable en position d'un siège de véhicule et le support de ce composant, comprennent encore une masselotte suspendue à un axe, sensible à la décélération du véhicule et agencée de façon à bloquer une articulation quand cette décélération dépasse un certain seuil, et ils sont essentiellement caractérisés en ce qu'ils comprennent en outre un compas composé de deux bielles montées pivotantes l'une sur l'autre à une première extrémité autour d'un premier axe horizontal transversal, la seconde extrémité de la première bielle étant montée pivotante autour d'un deuxième axe horizontal transversal lié au support et la seconde extrémité de la seconde bielle étant montée pivotante autour d'un troisième axe horizontal transversal disposé en arrière du premier et lié au composant et un secteur circulaire à surface cylindrique rugueuse ou dentée centré sur le premier axe et solidaire de la première bielle, en ce que la masselotte est suspendue au troisième axe et comporte une portée cylindrique rugueuse ou dentée excentrée par rapport à cet axe et propre à coagir avec un effet de coincement avec la surface cylindrique du secteur ci-dessus, et en ce qu'un ressort est interposé entre le composant et la masselotte de façon à solliciter angulairement celle-ci vers l'arrière pour sa position de repos et au contraire vers l'avant pour sa position de blocage.

Dans des modes de réalisation préférés, on a recours en outre à l'une et/ou à l'autre des dispositions suivantes :
- le ressort est taré de façon telle que la masselotte demeure immobile tant que la décélération appliquée sur le siège demeure inférieure à un seuil prédéterminé, de préférence égal à 100 m/s²,
- le composant réglable en position du siège de véhicule est l'assise de ce siège et le support de ce composant est l'embase dudit siège,
- le composant réglable en position du siège de véhicule est le dossier de ce siège et le support de ce composant est l'embase ou l'assise de ce siège,
- le siège est équipé de deux dispositifs de blocage du genre défini ci-dessus, placés respectivement d'un côté et de l'autre de celui-ci.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre schématiquement de côté l'avant d'un siège de véhicule équipé d'une rehausse et d'un dispositif de blocage établi selon l'invention.

La figure 2 est une vue de ce dispositif selon la flèche II de la figure 1.

Les figures 3 à 6 montrent schématiquement de côté le dispositif ci-dessus, respectivement :
- pour la position haute de la rehausse et la position de repos du dispositif (figure 3),
- pour la position haute de la rehausse et la position de blocage du dispositif (figure 4),
- pour la position basse de la rehausse et la position de repos du dispositif (figure 5),
- et pour la position basse de la rehausse et la position de blocage du dispositif (figure 6).

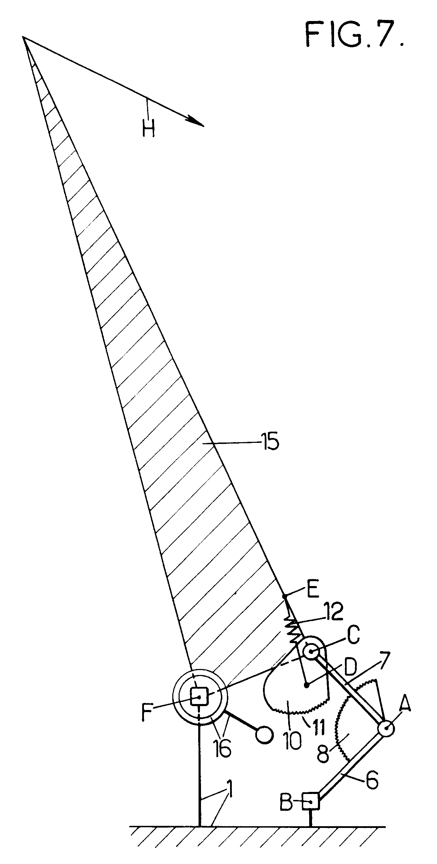

La figure 7 montre schématiquement de côté l'arrière d'un siège de véhicule comprenant le dossier de ce siège monté pivotant sur l'embase dudit siège et équipé d'un dispositif de blocage conforme à l'invention.

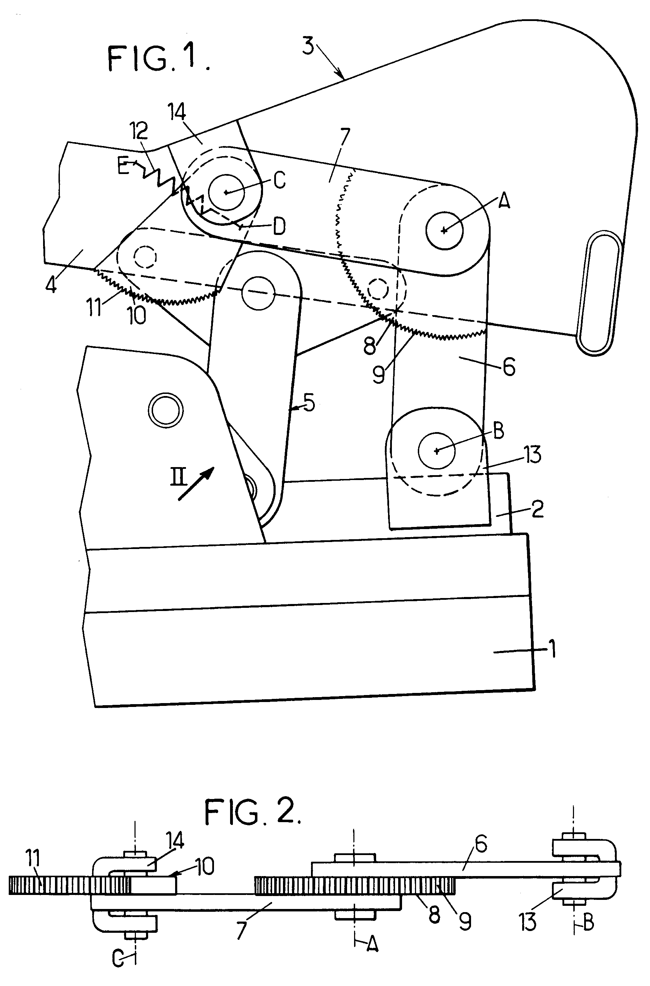

Dans le premier mode de réalisation faisant l'objet des figures 1 à 6, le siège de véhicule considéré comprend, entre autres :
- une embase 1 destinée à être fixée au plancher du véhicule, embase comportant en particulier des glissières 2 permettant un réglage du siège en avance ou recul,
- une assise 3 comprenant en particulier une ossature rigide 4 et un coussin (non représenté),
- et une rehausse 5 interposée verticalement entre les glissières et l'assise et permettant de régler à volonté la hauteur et/ou l'inclinaison de l'assise, cette rehausse comprenant notamment quatre bielles inclinées parallèles, deux à l'avant et deux à l'arrière.

La rehausse 5 est associée à des moyens permettant de la verrouiller en chacune de ses positions de réglage.

Ce verrouillage est suffisant pour résister aux efforts dus au poids de l'usager assis sur le siège considéré.

Mais ils sont souvent insuffisants pour résister aux efforts très élevés appliqués sur les sièges, et surtout sur les usagers, par les décélérations brusques dues à des chocs accidentels.

Pour renforcer ces moyens de verrouillage, on a recours ici à un compas composé de deux bielles 6 et 7 montées pivotantes à l'une de leurs extrémités autour d'un premier axe horizontal transversal A, la seconde extrémité de la première bielle 6 étant montée pivotante autour d'un deuxième axe horizontal transversal B lié à l'embase 1 et la seconde extrémité de la seconde bielle 7 étant montée pivotante autour d'un troisième axe horizontal transversal C lié à l'ossature 4 de l'assise et disposé en arrière du premier axe A.

Comme visible sur la figure 2, chacun des axes A, B et C est matérialisé par un rivet ou analogue et la liaison entre chacun des axes B et C et la structure 2 ou 4 qui le porte est réalisée par l'intermédiaire d'une chape (13,14) soudée sur cette structure.

On prévoit en outre :
- solidaire de la première bielle 6, un secteur circulaire 8 centré sur l'axe A et délimité extérieurement par une portée cylindrique 9 à surface rugueuse ou dentelée,
- et suspendue à l'axe C, une masselotte 10 présentant elle aussi une portée cylindrique 11 à surface rugueuse ou dentelée, portée excentrée par rapport à l'axe C.

Les dimensions et l'excentrement de cette portée 11 sont déterminés de façon telle qu'elle puisse coagir avec un effet de coincement avec la surface 9 du secteur 8 lorsque la masselotte 10 est basculée en direction dudit secteur 8 jusqu'au contact de celle-ci.

Enfin, un ressort 12 dont les deux extrémités D et E sont fixées respectivement sur la masselotte 10 et sur l'ossature d'assise 4 sollicite angulairement ladite masselotte vers l'arrière pour la position de repos de celle-ci.

Ce ressort 12 est en outre agencé et monté de façon telle que la sollicitation élastique qui en résulte de la masselotte 10 soit exercée angulairement vers l'avant lorsque la portée 11 de cette masselotte est en contact avec la portée 9.

A cet effet, le ressort 12 est avantageusement un ressort hélicoïdal de tension et son point D d'accrochage sur la masselotte 10 traverse le plan défini par le point E et l'axe C lors du basculement de ladite masselotte vers l'avant dû à l'application d'un choc sur le siège.

Le fonctionnement du mécanisme de blocage ainsi décrit est le suivant.

Au repos, c'est-à-dire tant qu'aucun blocage de la rehausse 5 n'est requis, la masselotte 10 demeure placée dans sa position arrière vers laquelle elle est sollicitée par le ressort 12 et pour laquelle sa portée 11 se trouve éloignée de la portée 9.

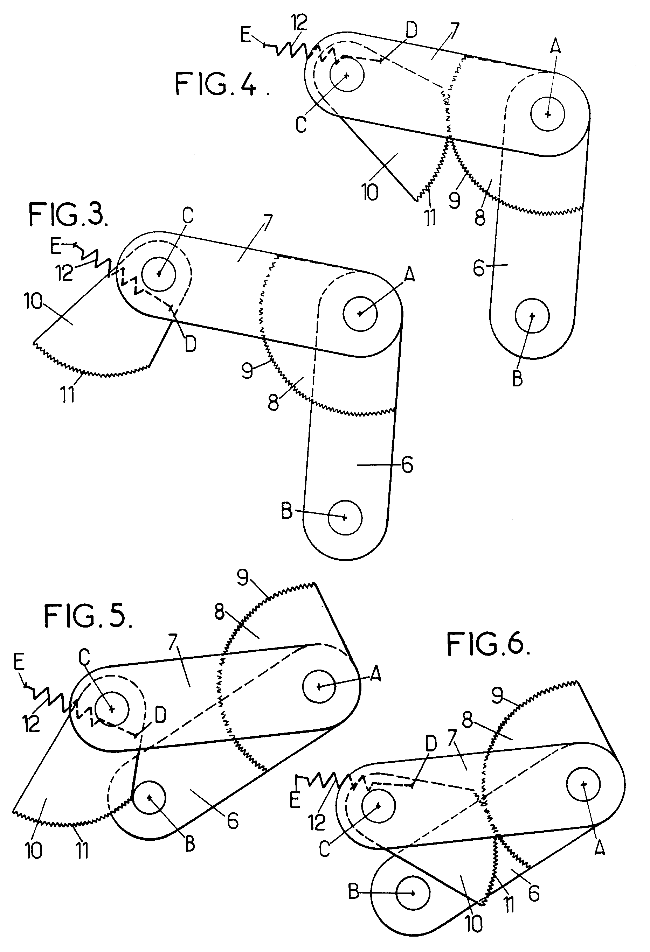

Cette situation peut être observée pour n'importe laquelle des positions de réglage de la rehausse, c'est-à-dire aussi bien pour les positions hautes de l'assise (figure 3) que pour les positions basses de celle-ci (figure 5).

Tant que le véhicule n'est soumis qu'à des décélérations de faible amplitude, comme c'est le cas pour les petits chocs ou freinages brusques correspondant à des décélérations de 20 ou 30 m/s² ou même de 50 m/s², la masselotte 10 demeure en place.

Au contraire, dès qu'une décélération imposée au véhicule dépasse un seuil prédéterminé pour lequel le ressort 12 a été taré, seuil par exemple égal à 100 m/s², la masselotte 10 bascule vers l'avant à l'encontre de l'effort de rappel du ressort, et ce jusqu'au contact de la portée 11 de cette masselotte avec la portée 9.

Au cours de ce basculement, la masselotte franchit une position de point mort pour laquelle la sollicitation angulaire exercée par le ressort s'annule et qui correspond au passage du point D dans le plan défini par l'axe C et par le point E.

Juste après dépassement de cette position, la sollicitation exercée par le ressort 12 sur la masselotte 10 change de sens : ladite masselotte est alors sollicitée vers l'avant, ce qui renforce instantanément la tendance de la portée 11 à s'appliquer contre la portée 9.

Vu la forme excentrée de ladite portée 11, on obtient un effet de coincement entre ces deux portées fermement appliquées l'une contre l'autre, et ce aussi bien pour les positions hautes de la rehausse (figure 4) que pour ses positions basses (figure 6) et pour toutes les positions intermédiaires.

Du fait dudit coincement, le compas constitué par les deux bielles 6 et 7 est rendu indéformable, aucune modification de l'inclinaison relative entre ces deux bielles n'étant plus possible.

Il en résulte que l'écartement mutuel entre les deux axes B et C ne peut plus être modifié et que l'assise demeure bloquée en sa position préréglée, même si les moyens de verrouillage de la rehausse 5 elle-même sont neutralisés de leur côté.

Le blocage obtenu est en général irréversible.

Pour assurer une bonne répartition des efforts, il convient de monter un dispositif de blocage du genre décrit ci-dessus de chaque côté de l'avant du siège, en le cachant notamment au-dessous du rebord transversal avant du coussin de l'assise de ce siège.

Dans le second mode de réalisation faisant l'objet de la figure 7, le siège du véhicule comprend, entre autres :
- une embase 1 telle que définie ci-dessus,
- et un dossier 15 monté de façon pivotante autour d'un axe F solidaire de l'embase.

Un mécanisme 16 facile à commander par la personne assise sur le siège permet de régler l'inclinaison du dossier 15 autour de l'axe F.

Entre l'embase 1 et le dossier 15 est interposé un mécanisme de blocage tout à fait identique à celui décrit ci-dessus pour le premier mode de réalisation et que l'on a affecté des mêmes références que précédemment.

On retrouve en particulier les deux bielles 6 et 7 montées pivotantes l'une sur l'autre autour de l'axe A, le secteur circulaire 8 à surface rugueuse solidaire de la bielle 6 et centré sur ledit axe A, la masselotte 10 présentant une portée cylindrique 11 à surface rugueuse excentrée par rapport à l'axe C et suspendue audit axe, et le ressort 12 tendu entre ses deux extrémités D et E.

Dans ce mode de réalisation, l'axe B est solidaire de l'embase 1, l'axe C est solidaire de l'ossature du dossier 15, ainsi que l'axe E, et l'axe D est solidaire comme précédemment de la masselotte 10.

Le fonctionnement du mécanisme ainsi défini est exactement le même que précédemment, la masselotte 10 venant coopérer avec le secteur 8 dès qu'un choc brusque est appliqué au véhicule.

Le blocage qui en résulte est particulièrement intéressant lorsque la ceinture de sécurité équipant le siège considéré présente un point d'ancrage disposé au sommet du dossier, comme il est schématisé par la flèche H sur la figure 7.

En suite de quoi, et quel que soit le mode de réalisation adopté, on obtient finalement un dispositif permettant de bloquer en sa position de réglage un composant réglable en position d'un siège de véhicule lors d'un choc de grande intensité, dispositif dont la constitution et le fonctionnement résultent suffisamment de ce qui précède.

Ce dispositif présente de nombreux avantages par rapport à ceux antérieurement connus et en particulier celui d'être à la fois très simple et très efficace et celui de pouvoir être facilement monté en parallèle sur n'importe quel mécanisme de réglage en position (rehausse, articulation...).

## Revendications

1. Dispositif pour bloquer, lors d'un choc, un composant (3,15) réglable en position d'un siège de véhicule, comprenant une masselotte (10) suspendue à un axe (C), sensible à la décélération du véhicule et agencée de façon à bloquer une articulation quand cette décélération dépasse un certain seuil, caractérisé en ce qu'il comprend en outre un compas composé de deux bielles (6,7) montées pivotantes l'une sur l'autre à une première extrémité autour d'un premier axe horizontal transversal (A), la seconde extrémité de la première bielle (6) étant montée pivotante autour d'un deuxième axe horizontal transversal (B) lié au support (1,2) dudit composant et la seconde extrémité de la seconde bielle (7) étant montée pivotante autour d'un troisième axe horizontal (C) transversal disposé en arrière du premier et lié au composant, et un secteur circulaire (8) à surface cylindrique rugueuse ou dentée (9) centré sur le premier axe (A) et solidaire de la première bielle (6), en ce que la masselotte (10) est suspendue au troisième axe (C) et comporte une portée cylindrique rugueuse ou dentée (11) excentrée par rapport à cet axe et propre à coagir avec un effet de coincement avec la surface cylindrique du secteur (8) ci-dessus et en ce qu'un ressort (12) est interposé entre le composant et la masselotte (10) de façon à solliciter angulairement celle-ci vers l'arrière pour sa position de repos et au contraire vers l'avant pour sa position de blocage.

2. Dispositif de blocage selon la revendication 1, caractérisé en ce que le ressort (12) est taré de façon telle que la masselotte (10) demeure immobile tant que la décélération appliquée sur le siège demeure inférieure à un seuil prédéterminé, de préférence égal à 100 m/s².

3. Dispositif de blocage selon l'une quelconque des précédentes revendications, caractérisé en ce que le composant réglable en position du siège de véhicule est l'assise (3) de ce siège, le support de ce composant étant l'embase (1,2) dudit siège.

4. Dispositif de blocage selon l'une quelconque des précédentes revendications, caractérisé en ce que le composant réglable en position du siège de véhicule est le dossier (15) de ce siège, le support de ce composant étant l'embase (1,2) dudit siège.

5. Siège de véhicule, caractérisé en ce qu'il est équipé de deux dispositifs de blocage selon l'une quelconque des précédentes revendications, placés respectivement d'un côté et de l'autre de celui-ci.

## Claims

1. Device for locking a position-adjustable component (3, 15) of a vehicle seat in the event of a shock, the device including a flyweight (10) suspended from an axis (C), responsive to deceleration of the vehicle, and disposed so as to lock a hinge once said deceleration exceeds a certain threshold, characterized in that it further comprises a scissors linkage comprising two links (6, 7) having respective first ends pivotally mounted to each other about a first transverse horizontal axis (A), the second end of the first link (6) being pivotally mounted about a second transverse horizontal axis (B) linked to the support (1, 2) of said component, and the second end of the second link (7) being pivotally mounted about a third transverse horizontal axis (C) disposed behind the first and linked to the component, and a circular sector (8) having a rough or toothed cylindrical surface (9) centered on the first axis (A) and secured to the first link (6), in that the flyweight (10) is suspended from the third axis (C) and includes a rough or toothed cylindrical bearing surface (11) that is eccentric relative to said axis and that is suitable for co-operating with a wedging effect with the cylindrical surface of the above sector (8), and in that a spring (12) is interposed between the component and the flyweight (10) so as to urge the flyweight angularly rearwards while it is in its rest position and, on the contrary, so as to urge it angularly forwards while it is in its locking position.

2. Locking device according to claim 1, characterized in that the spring (12) is rated so that the flyweight (10) remains stationary so long as the deceleration applied to the seat remains below a predetermined threshold, preferably equal to 100 m/s².

3. Locking device according to any one of the preceding claims, characterized in that the position-adjustable component of the vehicle seat is the seat proper (3) thereof, the support of said component being the base (1, 2) of said seat.

4. Locking device according to any one of the preceding claims, characterized in that the position-adjustable component of the vehicle seat is the back (15) thereof, the support of said component being the base (1, 2) of said seat.

5. Vehicle seat characterized in that it is fitted with two locking devices according to any one of the preceding claims, placed on respective sides of the seat.

## Patentansprüche

1. Vorrichtung zum Blockieren eines einstellbaren Bauteils (3, 15) eines Kraftfahrzeugsitzes während eines Aufpralls, die ein aufgehängtes Fliehgewicht (10) mit einer Achse (C) enthält, das auf die Verzögerung des Fahrzeuges anspricht und so ausgebildet ist, daß es ein Gelenk blockiert, sobald diese Verzögerung eine bestimmte Schwelle überschreitet, dadurch gekennzeichnet, daß die Vorrichtung darüber hinaus ein Zirkelgelenk, das aus zwei Stangen (6, 7) besteht, die an einem ersten Ende um eine erste waagerechte Querachse (A) zueinander schwenkbar sind, wobei das zweite Ende der ersten Stange (6) schwenkbar um eine zweite waagerechte Querachse (B), die an der Abstützung (1, 2) des Bauteils angebracht ist, und das zweite Ende der zweiten Stange (7) schwenkbar um eine dritte waagerechte Querachse (C) befestigt ist, die hinter der ersten Achse angeordnet und mit dem Bauteil verbunden ist, und ferner einen Kreisabschnitt (8) mit einer unebenen oder gezahnten, zylindrischen Oberfläche (9) enthält, die auf die erste Achse (A) zentriert und mit der ersten Stange (6) verbunden ist, daß das Fliehgewicht (10) an der dritten Achse (C) aufgehängt ist und einen unebenen oder gezahnten, zylindrischen Umfangsbereich (11) enthält, der exzentrisch in bezug auf diese Achse angeordnet ist und mit einem Verklemmeffekt mit der zylindrischen Oberfläche des erwähnten Kreisabschnittes (8) zusammenwirken kann, und daß zwischen dem Bauteil und dem Fliehgewicht (10) eine Feder (12) derart eingefügt ist, daß sie das Fliehgewicht winklig nach hinten in die Ruhestellung und im Gegensatz dazu nach vorn in die Blockierstellung zieht.

2. Blockiereinrichtung nach Anspruch 1, dadurch gekennzeichnet, daß die Feder (12) derart austariert ist, daß das Fliehgewicht (10) unbeweglich bleibt, so lange die auf den Sitz einwirkende Verzögerung unterhalb eines vorgegebenen Schwellwertes von vorzugsweise 100 m/s² bleibt.

3. Blockiereinrichtung nach einem der vorhergehenden Ansprüche, dadurch gekennzeichnet, daß das einstellbare Bauteil des Kraftfahrzeugsitzes das Sitzteil (3) des Sitzes und die Abstützung des Bauteils das Gestell (1, 2) dieses Sitzes ist.

4. Blockiereinrichtung nach einem der vorhergehenden Ansprüche, dadurch gekennzeichnet, daß das einstellbare Bauteil des Kraftfahrzeugsitzes die Rückenlehne (15) des Sitzes und die Abstützung dieses Bauteils das Gestell (1, 2) dieses Sitzes ist.

5. Kraftfahrzeugsitz, dadurch gekennzeichnet, daß er mit zwei Blockiereinrichtungen gemäß einem der vorhergehenden Ansprüche ausgestattet ist, die jeweils auf einer Seite des Sitzes angeordnet sind.
